# EUROPEAN PATENT SPECIFICATION

(11) **EP 4 009 811 B1**
(45) Date of publication and mention of the grant of the patent: **14.10.2026**
(21) Application number: 20751571.9
(22) Date of filing: 10.08.2020
(51) Int. Cl.: C08L 53/02, C08K 3/30, C08K 3/34, C08L 23/04, C09J 153/02

(54) **TPE BASED LINERS FOR PRESSURIZED CONTAINERS**
AUSKLEIDUNGEN AUF TPE-BASIS FÜR DRUCKBEHÄLTER
JOINTS À BASE DE TPE POUR CONTENANTS SOUS PRESSION

(30) Priority: 09.08.2019 BE 201905521
(43) Date of publication of application: 15.06.2022
(73) Proprietor: Anheuser-Busch InBev S.A., 1000 Brussels (BE)
(72) Inventor: PEIRSMAN, Daniel, 3000 Leuven (BE); VAN HOVE, Sarah, 3000 Leuven (BE); DIMCIC, Biljana, 3000 Leuven (BE)
(74) Representative: Marks & Clerk LLP
(86) International application number: PCT/EP2020/072421
(87) International publication number: WO 2021/028398

(56) References cited:
- EP-A1- 2 509 883
- EP-A1- 2 820 101

## Description

### FIELD OF THE INVENTION

The present invention generally relates to improved liner compositions for closures and more particularly, to thermoplastic elastomer liner compositions which provide an effective barrier to oxygen ingress. The liner compositions are highly effective to prevent oxygen ingress for containers such as those used in pressurized dispensing systems especially Bag-in-Container (BIC) or Bag-in-Bottle, Bag-in-Box or Bottle-in-Bottle (BIB).and which are advantageously characterized by improved physical properties such as tensile strain and tensile stress at yield. The invention also relates to a method for making such liners from such liner compositions as well as a method for making closures to be used for containers for beverage products.

### BACKGROUND OF THE INVENTION

Closures for use in beverage containers include a closure shell formed of metal, plastic or both metal and plastic and are typically provided with a liner on the inner surface of the closure shell end panel. The liner is intended to provide a sealing function between the closure member and the container opening in addition to the oxygen barrier function.

Notwithstanding the lined closure, oxygen can permeate the closure shell or enter through spaces between the closure shell and the container. Oxygen can adversely affect beverage products stored within a container since a small amount of oxygen can alter the taste of the beverage product or cause spoilage of the product. Accordingly, it is also desirable that the liners be made of or include a material which prevents oxygen ingress. Efforts to provide liners being effective against oxidation of the beverage stored within a container have been described in the prior art. Various techniques have been employed to formulate liner compositions to prevent oxygen ingress. In one technique, the liner composition includes an oxygen scavenger blended into the base polymer composition that can be molded into the form of a closure liner. With this type of closure liner, the oxygen scavenger will reduce the amount of residual oxygen in the headspace of the container upon filling, as well as consume any external oxygen that permeates through the closure. Another approach to prevent oxygen ingress is to utilize a liner composition that is an oxygen barrier - i.e., the liner is a physical barrier that prevents ingress of oxygen. Such a liner composition includes an oxygen barrier material in the base polymer composition that can be molded into the form of a closure liner. While this type of liner may reduce ingress of external oxygen into the container, it will not reduce the amount of oxygen in the headspace of the container. A further approach to prevent oxygen ingress is to utilize a closure liner that has both an oxygen scavenger and an oxygen barrier.

Examples of a closure with an oxygen absorbing liner are described in EP 2 467 420. The liner described therein is made of a TPE resin which is blended with an antioxidant or oxygen absorbing agent. The oxygen absorbing layer can be made of a thermoplastic elastomer with the oxygen absorbing agent blended therein. Other examples are EP-A- 2 509 883 and EP-A- 2 820101. While the liners or seals described above may be effective in limiting the amount of oxygen ingress into the container, further improvements in the field of oxygen barrier liners for closures are desirable. In addition, as a result of the multi-functionality of the liner composition especially for pressure dispensing systems such as for bottle in bottle closure, the liner composition needs to possess specific material and physical properties, with respect to the function of the liner having a safety function. Such properties include high tensile strength, low compression set and low tensile strain at yield, low hardness and low density while having high MFI. In addition, the liner should also be made of a composition that is easy to process and can be produced by known techniques such as injection molding and cold punch molding, and that can otherwise be easily incorporated into the closure.

The liner composition of the present invention and liners made from such compositions address at least all of the above-described objectives. The liner compositions in accordance of the present invention do provide the properties as especially required for containers such as those in pressurized-dispensing systems, wherein liquid or other fluid material is discharged from a source vessel by displacement with a pressurized medium, e.g., air or liquid, and to associated aspects relating to fabrication, operational processes, and deployment of such systems. Where liner-based containers are utilized for pressure dispense operation, the pressurizing gas itself, e.g., air or nitrogen, may permeate through the liner material and become dissolved in the liquid in the liner. When the liquid subsequently is dispensed, pressure drop in the dispensing lines and downstream instrumentation and equipment may cause liberation of formerly dissolved gas, resulting in the formation of bubbles in the stream of dispensed liquid, with consequent adverse effect. Pressurized containers are known in the art. Bag-in-containers, also referred to as bag-in-bottles or bag-in-boxes depending on the geometry of the outer vessel, all terms considered herein as being comprised within the meaning of the term bag-in-container, are a family of liquid dispensing container consisting of an outer container comprising an opening to the atmosphere - - the mouth-- and which contains a collapsible inner bag joined to said container and opening to the atmosphere at the region of said mouth. The dispensing system must comprise at least one vent fluidly connecting the atmosphere to the region between the inner bag and the outer container in order to control the pressure in said region to squeeze the inner bag and thus dispense the liquid contained therein.

Preferred containers in accordance of the present invention are the "integrally blow-molded bag-in-containers" assembling the bag into the container, by blow-molding a polymeric multilayer preform into a container comprising an inner layer and an outer layer, such that the adhesion between the inner and the outer layers of the thus produced container is sufficiently weak to readily delaminate upon introduction of a gas at the interface. The "inner layer" and "outer layer" may each consist of a single layer or a plurality of layers. Highly preferred pressurized containers are those described as bag in container (BIC) and/or Bottle in Bottle (BIB) described in EP2148770, EP2146832 and EP2152486.

The pressurized dispense systems are known in the art. To dispense the fluid contained in the inner bag, the bag-in-container is mounted onto a dispensing appliance. In its mounted position, a dispensing duct opening to the atmosphere is brought in fluid communication with the interior of the inner bag through the mouth of the bag-in-container, while a source of pressurized gas is brought in fluid communication with the space through vents in cooperation with closing means Pressurized gas source may be a cartridge of pressurized or liquefied gas, such as CO2 or N2, or it may be a pump or compressor.

The liner compositions required for said containers require high tensile stress at yield , low compression set, low tensile strain at yield, low tear strength, low hardness , low density and excellent MFI while having high oxygen absorption rates. In accordance with the present invention, new liner compositions based on TPE and SS/SMBS and UHMW-PE have been identified which demonstrate the properties as defined above.

As used herein, the terms "liner," "sealing compositions," and the like are broad terms and are used in their ordinary sense and refer, without limitation, to materials which, when used in preferred methods and processes, prevent oxygen ingress.

### SUMMARY OF THE INVENTION

Use of a closure liner composition for a container used within pressurized dispense systems, said composition comprising a blend of a thermoplastic elastomer (TPE) and ultra-high molecular weight polyethylene (UHMW-PE), wherein said blend comprises, by weight, between 50 to 70 parts of the thermoplastic elastomer and between 5 to 10 parts of the UHMW-PE.

Compositions of the type described above exhibit excellent properties as described above and, therefore, are useful as keg sealing and/or crown liners and/or can lining, plastic closure liners for beverage containers and sealing for pressure dispensing systems, especially for BIC bag in container and (BiB) bottle in bottle containers.

The liner can be formed to adhere to the inner-facing surface of the closure i.e. sealing function or to be used as a closure as such. According to the disclosure is the use of a closure liner composition as described herein, the closure liner composition being formed into a closure liner, the closure liner having a tensile elongation@yield between 390 to 760% and a tensile strength between 4.9 to 6.6 MPa.

### DETAILED DESCRIPTION OF THE INVENTION

The plastic composition of the present invention will be described below in the context of its preferred use, namely, as a liner composition for a pressurized container. It will be appreciated, however, that the liner composition of the present invention is not limited to such use. The plastic composition of the present invention can be used in any other application where, for example, a material with oxygen barrier properties is desired, and/or where a material exhibiting excellent physical properties is desired.

The compositions are easy to process by known processing and compounding methods, and moldable into a liner of the type described above.

### TPE:

Thermoplastic elastomers are polymers or blends of polymers that can be processed and recycled in the same way as a conventional thermoplastic material, but that also have a rubber-like quality and performance similar to that of rubber. Thermoplastic elastomers can be obtained by combining a thermoplastic polyolefin with an elastomeric composition in a way such that the elastomer is intimately and uniformly dispersed as a particle phase within a continuous phase of the thermoplastic polyolefin.

TPEs suitable for the present invention include:
(i) Styrenic Block Copolymers (TPE-S) which is based on two-phase block copolymers with hard and soft segments. The styrene end blocks provide the thermoplastic properties and the Butadiene mid-blocks provide the elastomeric properties. SBS when hydrogenated becomes SEBS, as the elimination of the C=C bonds in the butadiene component generated ethylene and butylenes mid-block, hence the SEBS acronym.
   Monprene^{®} Tekron^{®} and Elexar^{®} products from Teknor Apex are examples of hydrogenated styrenic block copolymers.
(ii) Thermoplastic Polyolefins (TPE-O or TPO). These materials are blends of polypropylene (PP) and un-crosslinked EPDM rubber. Apex is one example of this type of TPE-O.
(iii) Thermoplastic vulcanisates (TPE-V or TPV). These materials are compounds of PP and EPDM rubber, however they have been dynamically vulcanised during the compounding step.
(iv) *Thermoplastic polyurethanes (TPE-U or TPU).* These materials can be based on polyester or polyether urethane.
(v) Thermoplastic copolyesters (TPE-E or COPE or TEEE).
(vi) Melt processable rubber (MPR) (vii) Thermoplastic polyether block amides (TPE-A).

Examples of thermoplastic elastomers which can be included in the plastic composition of the present invention are, for example, a thermoplastic polyolefin homopolymer or co-polymer blended with an olefinic rubber which is fully cross-linked, partially cross-linked or not cross-linked at all. In a preferred embodiment, the thermoplastic elastomer composition can be a resinous polymer of propylene and a butyl-based cross-linked rubber of the type described in US. Pat. No. 5,843,577 .As further described in US Pat. No. 5,843,577, the thermoplastic elastomer can include other additives, including lubricants such as polyamides and other additives. Lubricants are typically added to soften a material and aid in the processing of certain tacky materials. Lubricants can also improve the torque removal properties of a liner made from the composition.

Examples of suitable thermoplastic elastomers are the thermoplastic elastomers sold by Advanced Elastomer Systems under the product name Trefsin^{®}. In US Pat. No. 6,062,269, Trefsin^{®} is generally described as a thermoplastic resin of the alloyed material of a polypropylene and an isobutylene-isoprene rubber.

In a preferred embodiment, the thermoplastic elastomer composition can include an ethylenepropylene copolymer and rubber which can be cross-linked and/or can include a terpolymer of ethylene, propylene and a diene. Examples of such thermoplastic elastomers include the commercially available Santoprene^{®}. Santoprene^{®} including an ethylene, propylene and diene terpolymer. Santoprene^{®} and other thermoplastic elastomers like it are available from Advanced Elastomer Systems, L. P. of Akron, Ohio.

The thermoplastic elastomer used in the composition of the present invention can also be a blend of one or more thermoplastic elastomers.

Highly preferred thermoplastic elastomer (TPE) according to the invention can be selected from the group comprising the styrene-based TPEs (STPEs).

Preferred examples of random or block copolymer of styrene with butadiene, isoprene include styrene butadiene rubber (SBR), styrene butadiene styrene (SBS), styrene isoprene styrene (SIS), hydrogenated SBS (SEBS), and hydrogenated SIS.

Styrene-based thermoplastic elastomers are polymers which consist of polymer chains with a polydiene central block and polystyrene terminal blocks (also called SBDs, styrene block copolymers) The diene block gives the polymer its elastomeric properties, while the polystyrene blocks constitute the thermoplastic phase. By preference, the polydiene block is composed of butadiene units, so that the resulting TPE is an SBS (styrene-butadiene-styrene polymer).

Since the main chain of an SBS contains unsaturations which are oxidation sensitive, the styrene-based TPE preferably is a hydrogenated polymer, i.e. a polymer in which at least part of the aliphatic unsaturation has been hydrogenated. Such products are also referred to as SEBS polymers (styrene-ethylene/butylene-styrene). Where in the foregoing the presence of styrene and/or butadiene in the STPEs has been mentioned, this is to elucidate rather than to restrict the term 'STPE', considering that an analogous result is to be obtained with polymers comprising blocks of polyisoprene (SIS: styrene-isoprene-styrene) or based on substituted styrene (for example α-methylstyrene). The STPE applicable according to the invention can also be a blend of a polyolefin and an SBC.

Highly preferred are thermoplastic elastomeric block copolymers of the saturated A-B-A type based on styrene and butadiene units. For example, styrene-ethylene butylene-styrene (SEBS) type block copolymers can be used. Such co-polymers are sold under the trade name Kraton-G^{®} (e.g., Kraton-G 1652 and Kraton-G 2705) and are available from the Shell Chemical Company.

Preferred TPE include those under the Epseal^{®} series sold by Hexpol customized SBS grade.

### UHMW-PE:

The liner compositions in accordance with the present invention comprise Ultra-high-molecular-weight polyethylene. UHMW-PE is an extremely high viscosity polymer that is produced in the form of a powder and has an average particle size diameter typically ranging from 100-200 microns. As a result of its viscosity, it generally cannot be processed by the common methods used for ordinary thermoplastics. Thus compression molding and ram extrusion processes are used to generate the high pressures needed to fuse UHMW-PE particles together and then typically are used to form the material into stock shapes or profiles with subsequent machining as necessary. Preferred UHMW are those commercially available under GUR^{®} which are ultra-high molecular weight polyethylene (UHMW-PE) is a linear polyethylene with a much higher molecular weight than standard PE. UHMW-PE powder materials are commercially available Ticona, Braskem, DSM, Teijin (Endumax), Celanese, and Mitsui.

It has been surprisingly found that the UHMW-PE within TPE liner compositions of the present invention have a positive impact both on tensile strain at yield and Tensile stress at yield resulting in excellent liner compositions for pressurized containers such as those for carbonated beverages (such as beer) in pressurized dispensing systems.. The liner compositions of the present invention are highly suitable for use for pressurized containers and pressurized dispensing systems including BiC and BIB. Preferred BIB containers are described in EP2148770, EP2146832 and EP2152486.

Although some of the thermoplastic elastomers described above may, to some degree, provide a barrier to oxygen, to further enhance such oxygen barrier properties, oxygen scavenger compounds can be added to the liner composition. In accordance of the present invention, the liners formulated with oxygen scavengers prevent oxygen ingress both in their function as oxygen barrier as well as in their function as oxygen scavenger

Preferred oxygen scavenging compounds are selected from the group comprising: salicylic acid chelate, a complex of a transition metal or salt thereof, potassium sulfite, an interacting mixture of potassium acetate and sodium sulfite, ferrous salts including ferrous sulfate and ferrous chloride, reducing sulphur compounds including dithonite, ascorbic acid and/or their salts, and reducing organic compounds including catechol and hydroquinone referred oxygen scavenger compounds are sodium sulfite and/or sodium -meta-bisulfite.

Other additives may also be included such as catalysts, anti oxidants, fillers oils, vitamins and salts. Preferred additives include vitamin A, B, D and E, talc and Fe Mn salts.

The above described compounds TPE and UHMW-PE can be combined with said additives such as oxygen scavenger including sulfites and/or lubricants including oil and/or catalysts including salts in proportions so that the liner composition, when formed into a liner for the closure, provides excellent oxygen barrier properties as well as high tensile strength, low compression set and low tensile strain at yield, low hardness and low density while having high MFI.

Accordingly, the liner composition comprises, by weight, between 50 to 70 parts of the thermoplastic elastomer, and between 5 to 10 parts, by weight, of the UHMW-PE. Additionally, the liner composition can include 2-15 parts, by weight, of an oxygen scavenger, preferably a selected from a sulfite such as Sodium sulfite and/or Sodium-meta-bisulfite. Preferred average particle size of the sulfite is between 1 and 100 micrometer, highly preferred between 10 and 30 micrometer. The liner composition can further include less than 10 parts, by weight, of a lubricant, less than 5 parts of catalyst and optionally fillers such as talc.

The relative proportions described above provide a liner composition that can be molded into an effective liner for a closure with the properties described above. While adjustments to the above-described proportions are possible, it has been also discovered that amounts of UHMW-PE is significantly outside of the ranges described above can result in a liner with certain properties that are inferior to the properties possessed by liners that include the UHMW-PE in the proportions described above. For example, if the amount of UHMW-PE is significantly below the lower end of the preferred range, the resultant liners may not have the necessary stress at yield and tensile strain at yield. If, on the other hand, the amount of UHMW-PE is significantly greater from the upper limit of the preferred range, the resultant liner may be more difficult to process and too hard and, thus, negatively affect sealing performance of the liner.

In accordance with the method for making the liner composition, the above described compounds can be processed and mixed in, for example, a twin-screw extruder equipped with feeders for the solid materials and pump to add liquid materials.

After compounding, the liner composition of the present invention can be formed into a liner and combined with the closure shell to provide a closure. Liners of the present invention can be formed into plates or discs or pads which can then be cold punch molded onto the inner surface of the closure shell. Alternatively, liners in a gasket-type shape can be injection molded and placed onto the inner surface of the closure shell.

Liners of the present invention which have been formed into discs or pads can have a thickness of 0.01-20 mm. More typically, the thickness of such liner discs or pads can be greater near or along the annular periphery of the liner where it contacts the end finish of the container. Such added thickness provides added barrier material where oxygen ingress is most likely to occur, namely, between the closure skirt and the container.

Liners of the present invention exhibit good to excellent barrier to oxygen ingress and are particularly useful liners for beverage containers. In accordance with the present invention, the liners formulated with the liner compositions have an oxygen ingress rate less than the commercial available liners at normal atmospheric conditions. Oxygen ingress can be measured by introducing nitrogen gas into a vessel sealed with a liner sample (plaque) or a closure fitted with a liner. The nitrogen gas picks up any oxygen present within the sealed vessel. The nitrogen gas exits the vessel through an outlet and the level of captured oxygen is recorded as an electronic signal and reported as cubic centimeters (cc) of oxygen permeating across a square meter(m<2>) of a plaque or into a package (closure with liner) in a day.)

The application of the present compositions in accordance with the present invention include keg sealing application, crown liner application, can lining , plastic closure lining for pressurized containers including BIC and BIB containers.

The present invention also includes a closure for a container, wherein the closure includes a closure liner fabricated from the liner composition. In particular, the present invention is directed to a metal crown for a beverage container, wherein the metal crown includes a closure liner fabricated from the liner composition. In addition, the present invention is directed to a container such as a BiB container filled with a product, wherein the container is capped by a closure that includes a liner fabricated from the liner composition. In particular, the present invention is also directed to a bottle filled with a beverage, wherein the bottle is capped by a metal crown that includes a liner fabricated from the liner composition.

The liner can be adapted to be in contact with liquid and may form a seal with the lip that forms the opening of the bottle. Thus, the liner may form a substantial portion, or the entire portion, of a contact area of a closure. The liner can be a barrier liner, such as an active or passive barrier liner. The liner can function as a fluid barrier (e.g., a liquid or gas), flavor barrier, and combinations thereof. For example, the liner can be a gas barrier that inhibits or prevents the passage of oxygen, carbon dioxide, and the like there through.

The liner can be pressed against a lip of a bottle to prevent liquid from escaping from the container that is sealed by a closure. In one embodiment, the liner is a gas barrier that prevents or inhibits gas from escaping from the container. In another embodiment, the liner is a flavor barrier that can prevent or limit the change of the taste of the fluid within the container.

In some embodiments, the liner can be pre-formed and inserted into the closure. For example, the closure can be shaped like a typical screw cap used to seal a bottle. The liner can be formed by cutting out a portion of a liner sheet and pre-cut can subsequently inserted into the closure. Alternatively, the liner can be formed within the closure whereby the liner can be formed through a molding process, such as over-molding.

Various set of formulations in accordance with the present invention with and without oxygen scavenger were tested. Details regarding liner compositions and liners made in accordance with the present invention and the advantages provided by the present invention will become apparent from the following illustrative working examples and formulations formulated with oxygen scavenger.

| | |
|---|---|
| Reference Formulation 1 | 73.9% Epseal XP2 + 0.1% Mn Salt + 5% GUR 2122 + 8% Talc + 6% Sodium Sulfite + 2% Sodium-meta-bisulfite + 3% Wheat germ Oil-Tocopherol + 1% Irgafos 168 + 1% Irganox 1076 |
| Formulation 2 | 57.5% Epseal XP2 + 0.5% Mn Salt + 9% GUR 2122 + 8% Talc + 6% Sodium Sulfite + 2% Sodium-meta-bisulfite + 3% Wheat germ Oil-Tocopherol + 2% Irgafos 168 + 2% Irganox 1076 |
| Formulation 3 | 64.9% Epseal XP2 + ü.l% Mn Salt + 5% GUR 2122 + 12% Talc + 6% Sodium Sulfite + 2% Sodium-meta-bisulfite + 6% Wheat germ Oil-Tocopherol + 2% Irgafos 168 + 2% Irganox 1076 |
| Formulation 4 | 62.5% Epseal XP2 + 0.5% Mn Salt + 9% GUR 2122 + 12% Talc + 6% Sodium Sulfite + 2% Sodium-meta-bisulfite + 6% Wheat germ Oil-Tocopherol + 1% Irgafos 168 + 1% Irganox 1076 |
| Formulation 5 | 65.5% Epseal XP2 + 0.5% Mn Salt + 5% GUR 2122 + 12% Talc + 9% Sodium Sulfite + 3% Sodium-meta-bisulfite + 3% Wheat germ Oil-Tocopherol + 1% Irgafos 168 + 1% Irganox 1076 |
| Formulation 6 | 59.9% Epseal XP2 + 0.1% Mn salt + 9% GUR 2122 + 12% Talc + 9% Sodium Sulfite + 3% Sodium-meta-bisulfite + 3% Wheat germ Oil Tocopherol + 2% Irgafos 168 + 2% Irganox 1076 |
| Formulation 7 | 54.5% Epseal XP2 + 0.5% Mn Salt + 5% GUR 2122 + 8% Talc + 9% Sodium Sulfite + 3% Sodium-meta-bisulfite + 6% Wheat germ Oil-Tocopherol + 2% Irgafos 168 + 2% Irganox 1076 |
| Formulation 8 | 52.9% Epseal XP2 + 0.1% Mn Salt + 9% GUR 2122 + 8% Talc + 9% Sodium Sulfite + 3% Sodium-meta-bisulfite + 6% Wheat germ Oil-Tocopherol + 1% Irgafos 168 * 1% Irganox 1076 |

Blends were prepared using a 26mm co-rotating twin screw extruder (L/D = 44). It is equipped with two gravimetric feeders for solid materials and with a peristaltic metering pump to add liquid materials. Two screw profiles (detailed below) were used for the study. They are detailed below.

### Injection molding

Plates of 150x150x2 mm³ and discs of 150 mm diameter and 12.5 mm of thickness were molded by injection molding extruder. Standard specimens for determination of tensile (ASTM D412) and tear resistance (ASTM D624) tests were obtained by die punch.

Test specifications:
Extruder temperature: 155°C
Mold temperature: 50°C
Injection speed: high

Plates of 80x80x2 mm³ were molded by injection molding.

Sample preparation for compression set.

Before testing, specimens were conditioned 24 hours at 23°C + 2°C and 50% RH.

Test specifications:
Extruder temperature: 155°C
Mold temperature: 50°C
Injection speed: high
Compression set system with plates was used to perform the tests.

The initial thickness of specimens is 12.5 ± 0.5mm compressed to a thickness between plates of 9,5mm. This distance was maintained during 22 hours at 70°C for the first test and 70 hours at 125°C for the second test. After this time, the stress was released, and the specimens were measured after 30 minutes of relaxation.

Sample specifications:
Following ASTM D 395 (2002)
Dimensions measured before and after each test

### Test specifications:

| | |
|---|---|
| Measurements conditions: | 70°C ± 2°C during 22 hours. |
| | 125°C ± 2°C during 70 hours. |

Hardness tester "Shore A"

A Shore A durometer Zwick was used and the hardness was measured at instant time and after 15 seconds of application.

Sample specifications:
Following ASTM D 2240 (2002)
Thickness at least 6mm

Test specifications:
Indenter radius: 35.00 ± 0.25°
Indenter diameter: 0.79 ± 0.03mm
Measurement conditions: 23°C ± 2°C

### Tensile test

Tensile testing machine Zwick Z010 with manual grips was used to perform the tests.

Before testing, specimens were conditioned 24 hours at 23°C ± 2°C and 50% RH. The following measurements were made:
Rp 100% (Mpa): Strength at 100% elongation
Rm (Mpa): Maximum Strength
E - Rm (%): Elongation at maximum strength
Nominal E - Rupture (%): Nominal elongation at break

Percent Elongation: Calculation of percent elongation by reading the change in "gauged length" by extensometer (25 mm).

Nominal Elongation "Strain": Calculation of nominal strain by reading the change in grip separation (80 mm).

Sample specifications:
Following ASTM D 412 (1998)
Dimensions measured before each test

Test specifications:
Speed of testing: 50 mm/min
Gauged length: 25 mm
Distance between grips: 80 mm
Cell Force: 2.5 kN
Measurement conditions: 23°C ± 2°C

### Tear resistance

Tensile testing machine Zwick Z010 with manual grips was used to perform the tests.

Before testing specimens were conditioned 24 hours at 23°C ± 2°C and 50% RH.

Sample specifications:
Following ASTM D624 (2000)
Dimensions measured before each test

Test specifications:
Speed of testing: 50 mm/min
Distance between grips: 60 mm
Cell Force: 2.5 kN
Measurements conditions: 23°C ± 2°C.

### Melt Flow Index (MFI)

Test specifications:
Following ASTM D1238 (2013)
Die diameter: 2.095mm
Temperature: 230°C and 250°C
Loads: 5kg and 21.6kg

### Density

Density was measured by Archimedes' method according to ASTM D792.

Sample specifications:
Following ASTM D792 (2008)
Test specifications:
   Liquid used: Ethanol
   Quantity of material weighted: around 2g
   Measurement conditions: 23°C

### Results:

All samples of the liners composition made in accordance with the present invention consistently displayed excellent results with respect to oxygen ingress including the functioning as oxygen barrier as well as oxygen scavenger for those formulations with oxygen scavenger as well as excellent results re tensile strength and tensile elongation @yield.
Tensile elongation@ yield: 390 to 760 %
Tensile Strength: 4.9 to 6.6 MPa
Hardness: 76 to 84.1 Shore A
Tear Strength: 6.5 to 11.6 kN/m
Density 0.9-1.1 g/cm3
Melt flow index 5kg at 230°c: 1-10 g/10 min
Compression set: 39.7 to 64.3 % for 22h/70°C.

Shelf life and product stability of the liner compositions of the present invention were found superior over standard closure on BIB following sensory evaluation test storage 23°C with aged samples.

Oxygen level evaluation were measured on BIB with standard liners versus liner compositions in accordance with the present invention and demonstrated significantly lower oxygen ingress up to 60% compared to standard liner compositions used for BIB and reduced oxygen ingress even compared to commercial liner compositions used for kegs or glass bottles.

## Claims

1. Use of a closure liner composition for a container used within pressurized dispense systems, said composition comprising a blend of a thermoplastic elastomer (TPE) and ultra-high molecular weight polyethylene (UHMW-PE), wherein said blend comprises, by weight, between 50 to 70 parts of the thermoplastic elastomer and between 5 to 10 parts of the UHMW-PE.

2. Use of a closure liner composition as defined by claim 1, whereby said TPE comprises a styrene-based TPE (STPE).

3. Use of a closure liner composition as defined by claim 2 whereby said STPE is a random copolymer or a block copolymer of styrene with butadiene or isoprene selected from the group consisting of styrene butadiene rubber (SBR), styrene butadiene styrene (SBS), styrene isoprene styrene (SIS), hydrogenated SBS (SEBS), and hydrogenated SIS.

4. Use of a closure liner composition as defined in any one of claims 1-3 further comprising an oxygen scavenger, preferably wherein the oxygen scavenger is one or more selected from the group consisting of sodium sulfite and sodium-meta-bisulfite.

5. Use of a closure liner composition according to any preceding claim wherein the oxygen scavenger comprises sodium sulfite.

6. Use of a closure liner composition as defined in claims 1-5 further comprising lubricants and/or catalysts

7. Use of a closure liner composition as defined in claims 1-6, the closure liner composition being formed into a closure liner, the closure liner having a tensile elongation@yield between 390 to 760% and a tensile strength between 4.9 to 6.6 Mpa, measured according to ASTM D412.

8. A closure for a container to be used within pressurized dispense systems, wherein the closure includes a closure liner fabricated from the closure liner composition defined in any one of the preceding claims.

9. A container for use in a pressurized dispense system, said container filled with a product, wherein the container is capped by a closure, wherein the closure includes a closure liner fabricated from the closure liner composition defined in any one of claims 1 to 6.

10. The container according to claim 9, wherein the container is a Bag in Container (BiC) container.

11. The container according to claim 9, wherein the container is a Bottle in Bottle (BiB) container.

12. A pressurized dispense system comprising a container according to any one of claims 9-11.

## Patentansprüche

1. Verwendung einer Verschlussauskleidungszusammensetzung für einen Behälter, der innerhalb von Druckdosiersystemen verwendet wird, wobei die Zusammensetzung eine Mischung aus einem thermoplastischen Elastomer (TPE) und Polyethylen mit ultrahohem Molekulargewicht (UHMW-PE) umfasst, wobei die Mischung, nach Gewicht, zwischen 50 und 70 Teile des thermoplastischen Elastomers und zwischen 5 und 10 Teile des UHMW-PE umfasst.

2. Verwendung einer Verschlussauskleidungszusammensetzung nach Anspruch 1, wobei das TPE ein TPE auf Styrolbasis (STPE) umfast.

3. Verwendung einer Verschlussauskleidungszusammensetzung nach Anspruch 2, wobei das STPE ein statistisches Copolymer oder ein Blockcopolymer aus Styrol mit Butadien oder Isopren ist, ausgewählt aus der Gruppe, bestehend aus Styrol-Butadien-Kautschuk (SBR), Styrol-Butadien-Styrol (SBS), Styrol-Isopren-Styrol (SIS), hydriertem SBS (SEBS) und hydriertem SIS.

4. Verwendung einer Verschlussauskleidungszusammensetzung nach einem der Ansprüche 1-3, die weiter einen Sauerstofffänger umfasst, wobei der Sauerstofffänger vorzugsweise eines oder mehrere ist, ausgewählt aus der Gruppe, bestehend aus Natriumsulfit und Natriummetabisulfit.

5. Verwendung einer Verschlussauskleidungszusammensetzung nach einem vorstehenden Anspruch, wobei der Sauerstofffänger Natriumsulfit umfasst.

6. Verwendung einer Verschlussauskleidungszusammensetzung nach den Ansprüchen 1-5, die weiter Schmierstoffe und/oder Katalysatoren umfasst.

7. Verwendung einer Verschlussauskleidungszusammensetzung nach den Ansprüchen 1-6, wobei die Verschlussauskleidungszusammensetzung zu einer Verschlussauskleidung geformt ist, wobei die Verschlussauskleidung eine Zugstreckdehnung zwischen 390 und 760 % und eine Zugfestigkeit zwischen 4,9 und 6,6 MPa aufweist, gemessen gemäß ASTM D412.

8. Verschluss für einen Behälter, der innerhalb von Druckdosiersystemen verwendet werden soll, wobei der Verschluss eine Verschlussauskleidung einschließt, die aus der Verschlussauskleidungszusammensetzung nach einem der vorstehenden Ansprüche hergestellt ist.

9. Behälter zur Verwendung in einem Druckdosiersystem, wobei der Behälter mit einem Produkt gefüllt ist, wobei der Behälter von einem Verschluss abgedeckt ist, wobei der Verschluss eine Verschlussauskleidung einschließt, die aus der Verschlussauskleidungszusammensetzung nach einem der Ansprüche 1 bis 6 hergestellt ist.

10. Behälter nach Anspruch 9, wobei der Behälter ein Bag-in-Container- (BiC) Behälter ist.

11. Behälter nach Anspruch 9, wobei der Behälter ein Bottle-in-Bottle- (BiB) Behälter ist.

12. Druckdosiersystem, umfassend einen Behälter nach einem der Ansprüche 9-11.

## Revendications

1. Utilisation d'une composition de doublure de bouchon pour un récipient utilisé dans des systèmes de distribution sous pression, ladite composition comprenant un mélange d'un élastomère thermoplastique (TPE) et de polyéthylène à poids moléculaire ultra-élevé (UHMW-PE), dans laquelle ledit mélange comprend, en poids, entre 50 et 70 parties de l'élastomère thermoplastique et entre 5 et 10 parties de l'UHMW-PE.

2. Utilisation d'une composition de doublure de bouchon telle que définie par la revendication 1, dans laquelle ledit TPE comprend un TPE à base de styrène (STPE).

3. Utilisation d'une composition de doublure de bouchon telle que définie par la revendication 2, dans laquelle ledit STPE est un copolymère aléatoire ou un copolymère séquencé de styrène avec du butadiène ou de l'isoprène sélectionné à partir du groupe constitué du caoutchouc styrène-butadiène (SBR), du styrène-butadiène-styrène (SBS), du styrène-isoprène-styrène (SIS), du SBS hydrogéné (SEBS) et du SIS hydrogéné.

4. Utilisation d'une composition de doublure de bouchon telle que définie dans l'une quelconque des revendications 1 à 3 comprenant en outre un absorbeur d'oxygène, de préférence dans lequel l'absorbeur d'oxygène est un ou plusieurs sélectionnés à partir du groupe constitué de sulfite de sodium et de métabisulfite de sodium.

5. Utilisation d'une composition de doublure de bouchon selon une quelconque revendication précédente, dans laquelle l'absorbeur d'oxygène comprend du sulfite de sodium.

6. Utilisation d'une composition de doublure de bouchon telle que définie dans les revendications 1 à 5, comprenant en outre des lubrifiants et/ou des catalyseurs.

7. Utilisation d'une composition de doublure de bouchon telle que définie dans les revendications 1 à 6, la composition de doublure de bouchon étant mise en forme pour former une doublure de bouchon, la doublure de bouchon présentant un allongement à la rupture entre 390 et 760 % et une résistance à la traction entre 4,9 et 6,6 MPa, mesurée selon la norme ASTM D412.

8. Bouchon pour un récipient destiné à être utilisé dans des systèmes de distribution sous pression, dans lequel le bouchon inclut une doublure de bouchon fabriquée à partir de la composition de doublure de bouchon définie dans l'une quelconque des revendications précédentes.

9. Récipient destiné à être utilisé dans un système de distribution sous pression, ledit récipient étant rempli d'un produit, dans lequel le récipient est fermé par un bouchon, dans lequel le bouchon inclut une doublure de bouchon fabriquée à partir de la composition de doublure de bouchon définie dans l'une quelconque des revendications 1 à 6.

10. Récipient selon la revendication 9, dans lequel le récipient est un récipient de type Bag in Container (BiC).

11. Récipient selon la revendication 9, dans lequel le récipient est un récipient de type Bottle in Bottle (BiB).

12. Système de distribution sous pression comprenant un récipient selon l'une quelconque des revendications 9 à 11.
